# EUROPÄISCHE PATENTANMELDUNG

(11) **EP 0 610 753 A1**
(43) Veröffentlichungstag der Anmeldung: **17.08.1994**
(21) Anmeldenummer: 94101275.9
(22) Anmeldetag: 28.01.1994
(51) Int. Cl.: D21H 19/18, D21H 19/20, D21H 19/82, A22C 13/00

(54) **Mehrschichtlackierungen von Cellulose-Schlauchhüllen**

(30) Priorität: 10.02.1993 DE 4303835
(71) Anmelder: WOLFF WALSRODE AKTIENGESELLSCHAFT, D-29699 Walsrode (DE)
(72) Erfinder: Weber, Gunter, Dr., D-29683 Fallingbostel (DE); Reiners, Ulrich, Dr., D-29643 Neuenkirchen (DE); Meyer-Stork, Sebastian, Dr., D-33659 Bielefeld (DE)
(74) Vertreter: Braun, Rolf, Dr.

(57) **Zusammenfassung**

Die Erfindung betrifft die Lackierung von Schlauchhüllen bevorzugt auf Cellulose-Basis mit einem aus mehreren Komponenten bestehenden Beschichtungssystem, wobei der einmalige Materialauftrag zu einer Mehrschichtstruktur der Lackauflage führt. Das Beschichtungssystem ist bevorzugt wäßrig und organohalogenfrei und führt zu einer verbesserten Sperrwirkung der Schlauchhülle gegenüber Wasserdampf und Sauerstoff.

## Beschreibung

Die Erfindung betrifft die Lackierung von Schlauchhüllen bevorzugt auf Cellulose-Basis, die zusätzlich mit Polymeren vorbehandelt sein können, mit einem aus mehreren Komponenten bestehenden Beschichtungssystem, wobei der ein- oder mehrmalige Materialauftrag zu einer Mehrschichtstruktur der Lackauflage führt.

Vor allem aus dem Bereich der Automobil-Lackierung sind Beschichtungssysteme für Metalle bekannt, deren unverträgliche Komponenten sich beim einmaligen Lackauftrag so entmischen, daß eine Mehrschichtstruktur der Auflage entsteht. Beschrieben werden geeignete Systeme z.B. in GB 1 570 540 und GB 2 046 765A als Pulverlacke sowie in GB 2 192 399A auf Lösungsmittelbasis. Die eindeutige Positionierung jeder Komponente im Schichtaufbau hängt von dem Verhältnis der spezifischen Oberflächenenergie ab: während der Bestandteil mit dem niedrigsten Wert die oberste Schicht bildet, orientiert sich die Komponente mit dem relativ höchsten Wert zum - hier polar angenommenen - Untergrund.

Meßtechnisch läßt sich die spezifische Oberflächenenergie leicht als Oberflächenspannung δ erfassen (Römpp Chemie Lexikon, Bd. 4, G. Thieme Verlag, Stuttgart (1991), S. 3075-3076).

Das Auffinden von Matrialkombinationen mit geeigneter Oberflächenspannungs-Abstufung wird im Falle der Metallbeschichtung dadurch erleichtert, daß diese Substrate extrem hohe spezifische Oberflächenenergien aufweisen. So liegen gemäß Handbook of Chemistry and Physics, 56. Ed., CRC Press, Cleveland (1975), S. F 23-46, die Werte für Aluminium bei 870 und für Eisen bei 1700 mN/m.

Für nichtmetallisch polare Substrate wie beispielsweise Materialien auf Cellulose-Basis bestehen diesbezüglich wesentlich ungünstigere Verhältnisse, da die Oberflächenspannungen allgemein um den Faktor 10-15 geringer sind. Zu letzterem zählen Schlauchhüllen, die in bekannter Weise durch zylindrisches Formen und längsaxiales Verkleben der sich überlappenden Kanten einer Regeneratcellulose-Bahn hergestellt werden (vgl. z.B. EP 0 037 543, EP 0 054 162, US 2.148.884, US 2.226.442, US 2.685.769, US 2.685.770, US 2.757.495 und US 2.773.773). Ebenso sind Verfahren und Vorrichtungen zur Herstellung von faserverstärkten Schlauchhüllen beschrieben, bei denen z.B. eine Cellulosefaservlies-Bahn durch Beschichtung mit regenerierter Cellulose längsaxial schlauchförmig verklebt wird (vgl. u.a. DE 28 29 102 und DE 25 12 994).

Derartige Materialien werden bevorzugt als Wursthüllen eingesetzt. Sie sind u.a. durchlässig gegenüber Wasserdampf und Sauerstoff, was z.B. bei der Verwendung als Hülle für Würste vom Rohwurst-Typ gewünscht ist, sich jedoch bei der entsprechenden Nutzung für Würste vom Koch- und Brühwurst-Typ als nachteilig erweist. Letztere verlangen eine gute Wasserdampf-Dichtigkeit, um Wasserverluste bei der Herstellung und Lagerung der Würste zu vermeiden sowie insbesondere beim Leberwurst-Typ eine ausreichende Sauerstoff-Barriere, damit das Brät keine oxidative Schädigung erfährt.

Zur Erreichung dieser Sperrschicht-Eigenschaften erfolgt deshalb oft eine nachträgliche Beschichtung der Hülle. Bislang werden dabei vor allem Systeme auf der Basis von Polyvinylidenchlorid (PVDC) eingesetzt (z.B. DE 35 38 702). Aus ökologischen Gründen besteht aber der Bedarf, für diesen Zweck organohalogenfreie Auflagen zu verwenden.

In DE 40 15 659 wird eine Wursthülle für Koch- und Brühwürste auf der Basis von Cellulose mit einer chlorfreien Barriereschicht gegenüber Luftsauerstoff und Wasserdampf beschrieben. Die damit zu erzielende Dichtigkeit reicht jedoch nicht an das durch PVDC-Lackierungen realisierbare Niveau heran. Außerdem muß diese Alternativ-Beschichtung mit einem relativ hohen Flächengewicht aufgetragen werden, was nicht der allgemeinen Forderung nach dem Vermindern von Materialeinsätzen entspricht.

Aus dem Vergleich der Wasserdampf- und O₂-Sperrwirkungen verschiedener Polymere geht hervor, daß bei dem Verzicht auf halogenhaltige Systeme nur durch die Kombination zweier unterschiedlicher Kunststoffe eine ausreichende Gesamtdichtigkeit zu erzielen ist (vgl. z.B. J.M. Mohr, D.R. Paul, J. Appl. Polym. Sci. 42 (1991), 1711 bis 1720).

Es ist daher die Aufgabe der vorliegenden Erfindung, eine organohalogenfreie Beschichtung für die beschriebenen Schlauchhüllen zur Verfügung zu stellen, die die Applikation einer separaten Wasserdampf- und O₂-Sperrschicht durch einmaligen Materialauftrag ermöglicht.

Die erfindungsgemäße Lösung der Aufgabe gelingt insbesondere dadurch, daß zur Beschichtung der Schlauchhüllen auf Cellulose-Basis bevorzugt wäßrige Lösungen, Emulsionen oder Dispersionen eingesetzt werden, die eine Wachskomponente und ein copolymeres Bindemittel enthalten. Bei der Verfilmung des Lackes entsteht eine Mehrschichtstruktur mit dem Wachs als Wasserdampf-Sperrschicht an der freien Oberfläche und dem Copolymer als Sauerstoff-Barriere auf dem Cellulose-Untergrund.

Die gewünschten, positiven Barriereeigenschaften aufgrund der Anreicherung des Wachses an der freien Oberfläche werden ebenfalls bei einer Vorbehandlung des Cellulose-Untergrundes mit einem Copolymerisat erreicht.

Gegenstand der Erfindung ist daher ein durch ein- oder mehrmaligen Auftrag aufgebrachtes, aus mehreren Komponenten bestehendes Beschichtungssystem für polare Schlauchhüllen, das zu einer Mehrschichtstruktur führt, dadurch gekennzeichnet, daß die Differenz der Oberflächenspannungen (gemäß DIN 53 914) zwischen dem zu beschichtenden, gegebenenfalls vorbehandelten Substrat und dem Beschichtungssystem in seiner aufzutragenden Form mindestens 10 mN/m, bevorzugt mindestens 20 mN/m beträgt.

Die erfindungsgemäße Lösung der Aufgabe ist überraschend, weil sich die Verhältnisse der freien Oberflächenenergien in den beanspruchten Systemen wesentlich ungünstiger darstellen als im Falle der eingangs zitierten Beschichtungen von Metallen. Zum einen weist der zumeist vorbehandelte Cellulose-Träger mit einer Oberflächenspannung deutlich unter 100 mN/m eine im Vergleich zu Metallen viel niedrigere Oberflächenspannung auf, zum anderen benötigen insbesondere die wäßrigen Beschichtungssysteme Stabilisatoren, deren Funktion in der Reduzierung der Grenzflächenspannungen besteht, was einer gezielten Separation der verfilmenden Komponenten an sich entgegenwirkt.

Als Basismaterial für die Schlauchhüllen können bekannterweise neben Cellulose und Regeneratcellulose auch andere Polysaccharide wie Stärken und Alginate verwendet werden. Auch modifizierte Polysaccharide wie z.B. Cellulose(misch)ether und vernetzte Cellulose sowie Proteine in Form von Kollagen und Gelatine etc. sind einsetzbar.

Die erfindungsgemäß geeigneten Hüllen können zusätzlich eine auf einer Oberfläche liegende Lackschicht tragen, deren polymere Bestandteile aus mindestens zwei der oragnohalogenfreien Monomere Acrylat, Methacrylat, Vinylacetat, Vinylalkohol, Ethylen, Propylen, Butadien, Styrol, Acrylsäure, Methacrylsäure, Acrylamid und Acrylnitril aufgebaut sind.

Auch hier kommt es bei der Verfilmung des insbesondere aus Wachskomponente und copolymeren Bindemittel bestehenden Lacken überraschenderweise ebenfalls zu einer Anreicherung der Wachskomponente an der Oberfläche.

Die erfindungsgemäß geeigneten Hüllen können eine Faserverstärkung aufweisen. Hierzu ist bekanntermaßen u.a. der Einsatz von Naturfasern wie Hanf- oder Flachsfasern bzw. die Verwendung von Synthesefasern wie Polyamid-, Polyester- oder Polyacrylnitril-Fasern geeignet. Die bahnförmige Faserverstärkung kann ein textiles Gebilde wie z.B. einen Faservliesstoff aus wirren oder geordneten Spinnfasern, ein Filament oder multiples Filament aus natürlichem oder synthetischem Material, ein Gewebe, Netzwerk, Gitter oder Gewirke darstellen.

Neben dem Basismaterial und gegebenenfalls einer Faserverstärkung können die Hüllen noch zusätzliche Verarbeitungshilfsmittel bzw. Additive der bekannten Art enthalten, wie z.B. Wasser. Glykol, Glycerin, Sorbit, Silikaten, Kieselsäuren, Aluminiumoxide, Pigmente und Antibakterizide.

Auf Cellulose basierende Hüllen, insbesondere Schlauchhüllen, werden häufig nach dem Viskoseverfahren hergestellt. Viskoselösungen sind wie bekannt beispielsweise durch die Umsetzung von Alkalicellulose mit Schwefelkohlenstoff zum Xanthat darzustellen. Beim Einsatz faserverstärkter Schlauchhüllen erfolgt die Applikation u.a. durch Beschichtung, Tauch-Imprägnierung oder Besprühung der Faserbahn mit der Viskose-Lösung (vgl. z.B. US 2.999.788), die zusätzlich u.a. Pigmente enthalten kann.

In den weiteren Verarbeitungsstufen werden die Viskosehaltigen Vorprodukte dann im allgemeinen in sauren Fällbädern behandelt, um die Cellulose zu regenerieren, anschließend mit Wasser neutral gewaschen, entschwefelt und dann gegebenenfalls mit den obengenannten Verarbeitungshilfsmitteln imprägniert. Nach einer abschließenden Trocknung bei 80 bis 140°C und Konditionierung weisen die Cellulose-Schlauchhüllen eine Dicke von 20 bis 500 µm und ein Flächengewicht von 25 bis 650 g/m² auf.

Um eine bessere Haftung des Lackes auf dem Trägermaterial zu erreichen, kann dieses bekanntermaßen vor der Beschichtung oberflächlich mit sogenannten Primern ausgestattet werden. Geeignete Systeme und Applikationsverfahren sind z.B. in US 2.573.956, GB 908.205, EP 0 469 891 oder R. Pelzer, Papier, 45 (1991) 372-377, beschrieben. Stellvertretend hierfür seien Melamin-Formaldehyd-, Harnstoff-Formaldehyd- und Polyamin- bzw. Polyamid-Epichlorhydrin-Harze sowie Polyalkylenimine genannt.

Die erfindungsgemäß geeigneten Wachse können natürlichen und synthetischen Ursprungs sein oder aus deren Mischungen untereinander aufgebaut sein. Zu den natürlichen Wachsen zählen dabei z.B. Candelilla-, Carnauba-, Montan- und Paraffin-Wachse, zu den synthetischen u.a. Paraffin- und Polyethylen-Wachse. Solche Verbindungen sind bekannt und z.B. in Ullmanns Encyclopädie der technischen Chemie, Bd. 24, S. 1-49, Verlag Chemie, Weinheim (1983), ausführlich beschrieben. Bevorzugt werden Carnauba-Wachse verwendet.

Einschränkungen hinsichtlich des Schmelzbereiches der erfindungsgemäß einzusetzenden Wachse ergeben sich dadurch, daß einerseits eine genügende Heißwasser-Resistenz der Beschichtung im Rahmen des üblichen Brühprozesses gewährleistet sein muß und andererseits noch eine vollständige Verfilmung beim Beschichten möglich ist. Bevorzugt wird deshalb ein Schmelzbereich zwischen 50 und 120°C und besonders zwischen 60 und 90°C. In diesem Rahmen erweisen sich auch Mischungen höher und niedriger schmelzender Wachse als effektive Hinsichtlich der Teilchengröße der dispergierten oder emulgierten Wachse sind Partikeldurchmesser unter 1,0 µm und insbesondere unter 0,1 µm zu bevorzugen.

Eine besonders bevorzugte Form des Auftrages der Beschichtung bildet wie bereits oben erwähnt die Applikation aus wäßriger Lösung, Emulsion oder Dispersion. Deshalb kann die Emulgier- bzw. Dispergierbarkeit der erfindungsgemäß geeigneten Wachse durch den an sich bekannten Einbau polarer Gruppen verbessert werden (vgl. z.B.: G.A. Russel, J. Am. Chem. Soc., 79 (1957) 3871; M. Irving et al., Polym. Degrad. Stab., 5 (1983) 467; N.G. Gaylord, J. Polym. Sci. Polym. Lett. Ed., 21 (1983) 23-30; A. Neyishi et al., J. Appl. Polym. Sci., 22 (1978) 2953 und A. Hoff, J. Appl. Polym. Sci., 29 (1984) 465). Die Verfahren dazu sind ebenfalls beschrieben (z.B. in: G.M. Gale, Appl. Organomet. Chem., 2 (1988) 17-31).

Die zur Applikation der erfindungsgemäßen Beschichtungen eingesetzten Lösungen, Emulsionen oder Dispersionen enthalten copolymere Bindemittel, die aus mindestens zwei der folgenden Monomere aufgebaut sind: Acrylate, Methacrylate, Vinylacetat, Vinylalkohol, Ethylen, Propylen, Butadien, Styrol, Acrylsäure, Methacrylsäure, Acrylamid und Acrylnitril. Bevorzugt werden Styrol-Butadien-Acrylnitril- oder Styrol-Butadien-Acrylat-Systeme eingesetzt.

Erfindungsgemäß geeignete Lösungen, Emulsionen oder Dispersionen können auch Mischungen solcher Copolymerisate enthalten.

Die genannten Copolymerisate und Verfahren zu ihrer Herstellung sind bekannt und ausführlich beschrieben (vgl. z.B.: R.W. Lenz, Organic Chemistry of Synthetic High Polymers, Interscience Publishers, New York (1976) oder Encyclopedia of Polymer Science and Engineering, Wiley-Interscience, New York (1985), S. 211-299).

Die Molmassen-Grenzen der erfindungsgemäß geeigneten Copolymerisate ergeben sich u.a. dadurch, daß bei zu geringem Molekulargewicht die Heißwasser-Resistenz der Beschichtung im Rahmen des zur Wurstherstellung notwendigen Brühens nicht ausreicht und daß bei zu hohem Molekulargewicht Verfilmungsschwierigkeiten beim Beschichten auftreten.

Die Variationsbreite hinsichtlich der Zusammensetzung der erfindungsgemäß geeigneten Copolymerisate wird u.a. dadurch begrenzt, daß die Beschichtung einerseits nicht zu weich sein darf, weil die Hülle sonst bei der Lagerung als Rolle verklebt ("verblockt") und andererseits nicht zu spröde, da die Dichtigkeit der Beschichtung sonst infolge mechanischer Belastungen der Hülle nachlassen kann. Diese Abstufung wird im Falle der oben als bevorzugt bezeichneten Copolymer-Systeme durch das Verhältnis zwischen Butadien-Anteil (Weich-Komponente) und Styrol-Anteil (Hart-Komponente) gesteuert.

Bei der Verwendung von Copolymeren auf der Basis partiell verseiften Polyvinylacetats wird ein Hydrolysegrad von >90 % sowie ein Molekulargewicht >50.000 g/mol und bei Acrylat-haltigen Copolymeren eine Masse >150.000 g/mol bevorzugt.

Die erfindungsgemäß einzusetzenden Copolymerisate können zusätzlich polare Gruppen wie Carboxyl- oder Hydroxylreste enthalten, die ihre Emulgier- bzw. Dispergierbarkeit in wäßrigen Systemen verbessern und Möglichkeiten zu Vernetzungen bieten. Als Vernetzer stehen u.a. Aziridine, Dialdehyde, Harnstoff- und Melamin-Formaldehyd-Harze, Polyamid-Epichlorhydrin-Harze, Alkalimetall-Hydroxide, Zink- und Zirkonium-Salze und Polycarbonsäuren zur Verfügung. Solche Systeme und Reaktionen sind bekannt und z.B. in P. Moles, Polym. Paint Colour J., 181 (1991) 266-267, 282, und D. Lämmermann, Melliand Textilber., 73 (1992), 274-279, beschrieben.

Auch selbstvernetzende Systeme, die beispielsweise durch den bekannten Einbau von N-Hydroxymethyl-Resten oder wärmehärtbaren Gruppen (vgl. z.B.: K. Pleßke, Kunststoffe, 59 (1969), 247-251) realisiert werden, sind geeignet.

Die erfindungsgemäßen wäßrigen Beschichtungssysteme können zusätzlich übliche Hilfsstoffe zur Verbesserung der Dispergier- bzw. Emulgierbarkeit der Copolymere enthalten und Stabilisatoren, die einer nachträglichen Koagulation der Polymerteilchen entgegenwirken. Bei den Hilfsstoffen handelt es sich im allgemeinen um anionische, neutrale oder kationische, niedermolekulare, oligomere oder polymere Emulgatoren, Tenside oder Schutzkolloide der an sich bekannten Art (vgl. z.B. Ullmanns Encyclopädie der technischen Chemie, Bd. 2, S. 273-281, Verlag Chemie, Weinheim (1972) oder ebenda Bd. 10, S. 449-473 (1975)). Außerdem können die erfindungsgemäßen Lösungen, Emulsionen oder Dispersionen bekannte Zusatzmittel wie Katalysatoren, Pigmente, Lösungsmittel, Verlaufshilfsmittel, Füllstoffe, Gleitmittel, Abstandshalter usw. umfassen.

Die Überführung der erfindungsgemäß zu verwendenden Copolymere und Wachse bzw. deren Mischungen in eine wäßrige Lösung, Emulsion oder Dispersion wird nach bekannten Verfahren entweder durch Lösen in einem mit Wasser mischbaren Lösungsmittel wie Aceton oder Tetrahydrofuran und anschließendem Zusatz von Wasser und Entfernung des Lösungsmittels oder durch Anwendung hoher Scherkräfte, z.B. mit einem Ultra-Turrax-Rührer unter Verwendung von Düsen oder Dissolverscheiben, vollzogen.

Die zur Applikation der erfindungsgemäßen Beschichtungen eingesetzten Lösungen, Emulsionen oder Dispersionen enthalten 10-60 %, bevorzugt 20-35 % des copolymeren Bindemittels (bezogen auf den Feststoff-Anteil) und 50 %, bevorzugt 5 bis 20 % der Wachs-Komponente (bezogen auf das Copolymer). Der Konzentrationsbereich wird in der Praxis vor allem durch die Viskosität begrenzt, die zwischen 50 und 60 mPas·sec liegen sollte, um einen optimalen Lackauftrag zu gewährleisten.

Wie eingangs erläutert ist bei einer Mehrschichtlackierung durch einmaligen Materialauftrag entscheidend, daß die Einzelkomponenten des Beschichtungssystems bezüglich ihrer Oberflächenspannungen in geeigneter Weise abgestuft sind, um einen eindeutigen Lackaufbau zu erzielen, Für die erfindungsgemäße Beschichtung müssen das copolymere Bindemittel und die Wachskomponente eine Oberflächenspannungsdifferenz von mindestens 5 mN/m, bevorzugt mindestens 10 mN/m aufweisen; die Differenz zwischen der Beschichtungsdispersion und dem Untergrund sollte mindestens 10 mN/m, bevorzugt mindestens 20 mN/m betragen. Die Messung der Oberflächenspannungs-Werte erfolgt gemäß DIN 53 914.

Die erfindungsgemäße Beschichtung kann außen- oder innenseitig aufgetragen werden, wobei als Applikationsformen Spritzen, Walzen, Rakeln, Gießen, Streichen, Tauchen und Drucken möglich sind. Bevorzugt befindet sich die Schlauchhülle dabei im aufgeblasenen Zustand und wird durch Tauchen und anschließende Windbürsten-Abstreifung mit der gewünschten Auflage versehen.

Nach dem Trocknen durch Hitzeeinwirkung weist die Beschichtung ein Flächengewicht von 5 bis 50 g/m², bevorzugt 7 bis 15 g/m² auf.

Wie den unten angegebenen Beispielen zu entnehmen ist kommt es bezüglich der Barriere-Eigenschaften der erfindungsgemäßen Beschichtung zu synergistischen Effekten zwischen Wachs und copopolymerem Bindemittel. Die durch die Kombination der beiden Komponenten zu erzielenden Sperrwirkungen sind wesentlich besser als es aufgrund einer Addition des Barriere-Effekts der Einzelkomponenten zu erwarten wäre. Die Sauerstoff-Durchlässigkeit (gemäß DIN 53 380 bei 23°C, 75 % r.F.) beträgt höchstens 170 cm³/m²⁻24 h · bar, bevorzugt höchstens 130 cm³/m²·24 h · bar und besonders bevorzugt höchstens 100 cm³/m²·24 h · bar, die Wasserdampf-Durchlässigkeit (gemäß DIN 53 122, 23°C, 85 % r.F.) höchstens 80 g/m²·24 h, bevorzugt höchstens 20 g/m²·24 h und besonders bevorzugt höchstens 10 g/m²·24 h. Die Werte beziehen sich auf ein Einheits-Flächengewicht des Lackauftrages von 10 g/m².

Die beschriebene Vorbehandlung der Schlauchhülle mit insbesondere auf Polymeren basierenden Substanzen kann vorteilhaft sein, wenn bei den heute üblichen Produktionsmethoden von lackierten Schlauchhüllen eine fehlerfreie, vollständig geschlossene Lackschicht mit den gewünschten Eigenschaften hergestellt werden soll.

Die als besonders geignet beschriebenen Carnauba-Wachse zeichnen sich dadurch aus, daß sie neben der in Kombination mit dem Bindemittel zu erzielenden Wasserdampfdichtigkeit noch weitere wichtige Funktionen übernehmen. Sie wirken zusätzlich als Abstandshalter und Gleitmittel, Außerdem leisten sie beim Einsatz der Beschichtung als Auflage für Wurstdärme einen Beitrag zur anwendungstechnisch erwünschten Haftung zwischen Brät und Hülle.

Auch das copolymere Bindemittel übernimmt neben seiner Funktion im Rahmen der Sperrschicht-Eigenschaften weitere Aufgaben. Es trägt vor allem dazu bei, daß der Verbund von Trägermaterial und Beschichtung auch unter in der Praxis üblichen, thermischen und mechanischen Belastungen, insbesondere im Zusammenhang mit der Anwendung als Wursthülle, stabil und funktionstüchtig bleibt, Ohne die Erfindung einzuschränken, sei in diesem Zusammenhang auf das Raffen des Darmes zu Raupen hingewiesen, das trotz der intensiven Knick-Beanspruchung nicht zu einem Nachlassen der beschriebenen Sperreigenschaften führt.

Die vorliegende Erfindung soll anhang der nachfolgenden Ausführungsbeispiele näher erläutert werden.

### Beispiele

In den folgenden Beispielen sind die prozentualen Konzentrationen - sofern nichts anderes vermerkt ist - w/w-Angaben und die Permeationswerte gemäß DIN (Wasserdampf: DIN 53 122, 23°C, 85 % r.F.; Sauerstoff: DIN 53 380, 23°C, 75 % r.F.) ermittelt. Zur Bestimmung der Gewichtsverluste werden 50 cm lange Hüllenabschnitte des Kalibers 60 mm mit Brühwurstbrät gefüllt und im Kühlraum bei 2°C und 65 % r.F.) gelagert. Die Messung der Oberflächenspannung σ erfolgt gemäß DIN 53 914.

### Beispiel 1 (zum Vergleich)

Ein faserverstärkter Cellulose-Schlauch (Walsroder FOB braun, Kal. 60, Fa. Wolff Walsrode AG, D-3030 Walsrode) wird im aufgeblasenen Zustand per Tauchlackierung und anschließender Trocknung bis zu einer Oberflächentemperatur von 90°C mit einer wäßrigen Primer-Lösung imprägniert, die 1 % eines Polyamid-Epichlorhydrin-Harzes (Kymene SLX®, Fa. Hercules, D-5200 Siegburg) und 10 % Glyzerin enthält. Nach dem Abkühlen des Darmes (δ >70 mN/m) auf Raumtemperatur erfolgt die Beschichtung, indem nach dem gleichen Applikationsverfahren eine wäßrige Dispersion aufgetragen wird, die 30 % eines Copolymers aus Styrol, Butadien und Acrylnitril (Styrofan® LD 600 S, BASF AG, D-6700 Ludwigshafen; σ = 47,6 mN/m) und 3 % Glycerin enthält, Getrocknet wird hierbei bis zu einer Oberflächentemperatur von 140°C. Es wird eine klebrige, gut haftende Auflage mit einem Flächengewicht von 9,8 g/m² erhalten, die eine Wasserdampfdurchlässigkeit (WDDU) von 80 g/m²·24 h und eine Sauerstoffdurchlässigkeit (O₂-DU) von 200 mL/m²bar·d liefert. Beim Schälen der mit Brühwurst gefüllten Muster ist keine Haftung zwischen Hülle und Brät (flächiger Gelee-Absatz) festzustellen. Nach 10 Tagen ergeben sich Gewichtsverluste von 4 %.

### Beispiel 2 (zum Vergleich)

Entsprechend Beispiel 1 wird ein Cellulose-Kunstdarmschlauch präpariert und lackiert, wobei die Beschichtung anstelle des in Beispiel 1 eingesetzten Systems mit einer wäßrigen Dispersion erfolgt, die 25 % eines Carnauba-Wachses (Ultralube W 7090®, Fa. Surface Chemie, D-5448 Kastellaun, σ = 34,3 mN/m) und 3 % Glycerin enthält.

Es wird eine spröde, schlecht haftende Auflage mit einem Flächengewicht von ca. 2,8 g/m²·24 h erhalten, die einen WDDU-Wert von 75 g/m²·d und einen O₂-DU-Wert von 280 mL/m²bar·24 h liefert. Aufgrund der Knickbruch-Empfindlichkeit der Beschichtung gelingt die Brühwurst-Füllung der Muster nicht.

### Beispiel 3

Entsprechend Beispiel 1 wird ein Cellulose-Kunstdarmschlauch präpariert und lackiert. Die Beschichtung erfolgt anstelle des in Beispiel 1 eingesetzten Systems mit einer wäßrigen Dispersion, die 30 % Styrofan® LD 600 S (vgl. Beispiel 1), 10 % (bezogen auf das Copolymer) Ultralube W 7090 (vgl. Beispiel 2) und 3 % Glycerin enthält.

Es wird eine flexible, nicht klebende, gut haftende Auflage mit einem Flächengewicht von ca, 9,8 g/m² erhalten, die einen WDDU-Wert von 20 g/m²·24 h und eine O₂-Durchlässigkeit von 155 g/m²·bar·24 h liefert, Beim Schälen der mit Brühwurst gefüllten Muster ist eine intensive Haftung zwischen Hülle und Brät festzustellen, die die unerwünschte Separation von Gelee sicher verhindert, Nach 10 Tagen ergeben sich Gewichtsverluste von 1,8 %.

### Beispiel 4

Entsprechend Beispiel 1 wird ein Cellulose-Kunstdarmschlauch präpariert und lackiert, Die Beschichtung erfolgt anstelle des in Beispiel 1 eingesetzten Systems mit einer wäßrigen Dispersion, die 25 % Styrofan LD 600 S (vgl. Beispiel 1), 8,5 % (bezogen auf das Copolymer) eines Polyethylen-Wachses (Ultralube W 813, Surface Chemie, D-5448 Kastellaun; σ = 32,8 mN/m) und 3 % Glycerin enthält.

Es wird eine flexible, nicht klebende, gut haftende Auflage mit einem Flächengewicht von ca. 10,8 g/m² erhalten, die einen WDDU-Wert von 47 g/m²·24 h und eine O₂-Durchlässigkeit von 164 g/m²·bar·24 h liefert. Beim Schälen der mit Brühwurst gefüllten Muster ist eine leichte Haftung zwischen Hülle und Brät festzustellen. Nach 10 Tagen ergeben sich Gewichtsverluste von 2,9 %.

### Beispiel 5

Ein ca. 50 cm langer Abschnitt eines Cellulose-Kunstdarmschlauches (Walsroder FRO-E, Kal. 105, Fa. Wolff Walsrode AG, D-3030 Walsrode) wird auf einer Glasplatte passender Größe gezogen und durch Besprühen mit Wasser angefeutet. Die so präparierte Probe wird dann in einem auf 180°C vorgeheizten Umluft-Trockenschrank bis zum Erreichen einer Oberflächentemperatur von 118 bis 125°C getrocknet und anschließend auf Raumtemperatur abgekühlt. Die nachfolgende Beschichtung geschieht einseitig auf der völlig plan liegenden, aufgezogenen Schlauchhülle mit Hilfe einer Rakel. Zunächst wird wie in Beispiel 1 eine Primer-Lösung aufgetragen. Die Trocknung der Probe erfolgt bis zum Erreichen einer Oberflächentemperatur von 125°C im Umluft-Trockenschrank. Nach dem Abkühlen des Darmes auf Raumtemperatur erfolgt die Beschichtung, indem nach dem gleichen Applikationsverfahren eine wäßrige Dispersion aufgetragen wird, die 25 % eines Copolymers aus Styrol und Acrylaten (Joncryl® 77, Fa. S.C. Johnson Polymer, NL-3641 RV Mijdrecht; σ = 38,2 mN/m), 20 % (bezogen auf das Copolymer) Ultralube W-7090 (vgl. Beispiel 2) und 3 % Glycerin enthält. Die oberflächliche Endtemperatur der Probe beim Verfilmungsprozeß beträgt hier 145-150°C.

Es wird eine flexible, nicht klebende, gut haftende Auflage mit einem Flächengewicht von ca. 5,6 g/m² erhalten, die einen WDDU-Wert von 12 g/m²·24 h liefert.

### Beispiel 6

Entsprechend Beispiel 5 wird ein Cellulose-Kunstdarmschlauch präpariert und lackiert, Die Beschichtung erfolgt anstelle des in Beispiel 5 eingesetzten Systems mit einer wäßrigen Dispersion, die 25 % eines Copolymers aus Styrol und Butadien (Baystal® P 1800, Fa. Bayer AG, D-5090 Leverkusen; σ = 40,8 mN/m), 19,2 % (bezogen auf das Copolymer) Ultralube W-813 (vgl. Beispiel 4), 4,8 % (bezogen auf das Copolymer) Ultralube W-7090 (vgl. Beispiel 2) und 3 % Glyzerin enthält.

Es wird eine flexible, nicht klebende, gut haftende Auflage mit einem Flächengewicht von ca. 6,8 g/m² erhalten, die einen WDDU-Wert von 12 g/m²·24 h liefert.

### Beispiel 7

Entsprechend Beispiel 5 wird ein Cellulose-Kunstdarmschlauch präpariert und lackiert, Die Beschichtung erfolgt anstelle des in Beispiel 5 eingesetzten Systems mit einer wäßrigen Dispersion, die 20 % eines Copolymers aus Ethylen und Acrylsäure (Primacor® 4983, Fa. DOW Europe, CH-8810 Horgen; σ = 47,7 mN/m), 30 % Michers Lube 743, Paraffinwachs, Fa. Michelman, B-6790 Aubange; σ = 43,1 mN/m) und 3 % Glyzerin enthält.

Es wird eine flexible, nicht klebende, gut haftende Auflage mit einem Flächengewicht von ca. 6,8 g/m² erhalten, die einen WDDU-Wert von 20 g/m²·24 h liefert.

### Beispiel 8

Entsprechend Beispiel 1 wird ein Cellulose-Kunstdarmschlauch mit einer wäßrigen Primer-Lösung imprägniert. Als weitere Vorbehandlung wird nach dem in Beispiel 1 beschriebenen Applikationsverfahren eine wäßrige Dispersion aufgetragen, die 25 % eines Copolymeren aus Styrol, Butadien und Acrylsäure (Styrofan DS2306X, BASF, σ = 46 mN/m) und 3 % Glycerin enthält. Nach der Trocknung erfolgt die Beschichtung des so vorbehandelten Darmes nach wiederum dem gleichen Applikationsverfahren, indem eine wäßrige Dispersion aufgetragen wird, die 25 % eines Copolymeren aus Styrol, Butadien und Acrylsäure (Styrofan DS2306X, BASF, σ - 46 mN/m) und 5 % eines Carnauba-Wachses (Ultralube W-7090, Surface Chemie, D-5448 Kastellaun; σ = 34,3 mN/m) enthält. Getrocknet wird bis zu einer Oberflächentemperatur von 140 C.

Es wird eine flexible, nicht klebende, gut haftende Auflage mit einem Flächengewicht von ca. 10 g/m² erhalten, die einen WDDU-Wert von 50 g/m²·24 h und eine O₂-Durchlässigkeit von 240 g/m²·bar·24 h liefert. Beim Schälen der mit Brühwurst gefüllten Muster ist eine leichte Haftung zwischen Hülle und Brät festzustellen. Nach 10 Tagen ergeben sich Gewichtsverluste von 1,8 %.

### Beispiel 9

Entsprechend Beispiel 1 wird ein Cellulose-Kunstdarmschlauch mit einer wäßrigen Primer-Lösung imprägniert. Als weitere Vorbehandlung wird nach dem in Beispiel 1 beschriebenen Applikationsverfahren eine wäßrige Dispersion aufgetragen, die 18 % eines Copolymers aus Ethylen und Acrylsäure (Primacor 4983, Fa. DOW Europe, CH-8810 Horgen: σ = 47,7 mN/m) und 3 % Glycerin enthält. Nach der Trocknung erfolgt die Beschichtung des so vorbehandelten Darmes nach wiederum dem gleichen Applikationsverfahren, indem eine wäßrige Dispersion aufgetragen wird, die 18 % eines Copolymers aus Ethylen und Acrylsäure (Primacor 4983, Fa. DOW Europe, CH-8810 Horgen; σ = 47,7 mN/m) und 3,6 % eines Carnauba-Wachses (Ultralube W-7090, Surface Chemie, D-5448 Kastellaun; σ = 34,3 mN/m) enthält, Getrocknet wird bis zu einer Oberflächentemperatur von 145 C.

Es wird eine flexible, nicht klebende, gut haftende Auflage mit einem Flächengewicht von ca. 6 g/m² erhalten, die einen WDDU-Wert von 30 g/m²·24 h und eine O₂-Durchlässigkeit von 230 cm/m²·bar·24 h liefert.

## Patentansprüche

1. Durch ein- oder mehrmaligen Auftrag aufgebrachtes, aus mehreren Komponenten bestehendes Beschichtungssystem für polare Schlauchhüllen, das zu einer Mehrschichtstruktur führt, dadurch gekennzeichnet, daß die Differenz der Oberflächenspannungen (gemäß DIN 53 914) zwischen dem zu beschichtenden, gegebenenfalls vorbehandelten Substrat und dem Beschichtungssystem in seiner aufzutragenden Form mindestens 10 mN/m, bevorzugt mindestens 20 mN/m beträgt.

2. Beschichtungssystem nach Anspruch 1, dadurch gekennzeichnet, daß es wäßrig und organohalogenfrei ist.

3. Beschichtungssystem nach einem der Ansprüche 1 oder 2, dadurch gekenzeichnet, daß es aus einer Wachskomponente und einem copolymeren Bindemittel besteht, wobei die Differenz der Oberflächenspannungen der beiden Bestandteile in ihrer aufzutragenden Form mindestens 5 mN/m, bevorzugt mindestens 10 mN/m beträgt.

4. Beschichtungssystem nach einem der Ansprüche 1 oder 2, dadurch gekennzeichnet, daß der erste Auftrag aus einem copolymeren Bindemittel und der zweite Auftrag aus einer Wachskomponente und einem copolymeren Bindemittel besteht, wobei die Differenz der Oberflächenspannungen der beiden Bestandteile in ihrer aufzutragenden Form mindestens 5 mN/m, bevorzugt mindestens 10 mN/m beträgt.

5. Beschichtungssystem nach einem der Ansprüche 1 bis 3, dadurch gekennzeichnet, daß das Wachs zwischen 50°C und 120°C, bevorzugt zwischen 60 und 90°C schmilzt,

6. Beschichtungssystem nach einem der Ansprüche 1 bis 5, dadurch gekennzeichnet, daß das copolymere Bindemittel aus mindestens zwei der folgenden Monomeren aufgebaut ist: Acrylate, Methacrylate, Vinylacetat, Vinylalkohol, Ethylen, Propylen, Butadien, Styrol, Acrylsäure, Methacrylsäure, Acrylamid und Acrylnitril.

7. Beschichtungssystem nach einem der Ansprüche 1 bis 6, dadurch gekennzeichnet, daß der Wachsanteil bis zu 50 %, bevorzugt 5 bis 20 % (bezogen auf das Copolymer) beträgt.

8. Schlauchhüllen beschichtet mit Systemen gemäß einem der Ansprüche 1 bis 7.

9. Schlauchhüllen auf Cellulosebasis beschichtet mit Systemen gemäß einem der Ansprüche 1 bis 8.

10. Verwendung der Schlauchhüllen gemäß Anspruch 8 oder 9 als Wursthüllen.
